# EUROPÄISCHE PATENTSCHRIFT

(11) **EP 1 154 150 B1**
(45) Veröffentlichungstag und Bekanntmachung des Hinweises auf die Patenterteilung: **27.07.2005**
(21) Anmeldenummer: 01110102.9
(22) Anmeldetag: 02.05.2001
(51) Int. Cl.: F02M 55/00, F16L 37/00

(54) **Rastbarer Leitungsverbinder, insbesondere für Krafstoffleitungen**
Snap-on pipe connector especially for fuel lines
Raccord de conduite encliquetable, particulièrement pour conduites de carburant

(30) Priorität: 10.05.2000 DE 20008378 U
(43) Veröffentlichungstag der Anmeldung: 14.11.2001
(73) Patentinhaber: Voss Automotive GmbH, 51688 Wipperfürth (DE)
(72) Erfinder: Brandt, Josef, 51688 Wipperfürth (DE); Isenburg, Marco, 58553 Halver (DE)
(74) Vertreter: Patentanwälte Dr. Solf & Zapf

(56) Entgegenhaltungen:
- EP-A- 0 918 156
- DE-A- 19 650 535
- US-A- 4 865 361
- US-A- 5 095 564
- US-A- 5 167 213

## Beschreibung

Die vorliegende Erfindung betrifft einen rastbaren Leitungsverbinder zum Anschluß mindestens einer Druck- und/oder Strömungsmittel-Leitung, insbesondere Kraftstoff-Leitung, an ein Verbindergegenstück, bestehend aus einem Steckerteil, das einen Steckerschaft, der eine senkrecht zu einer Längsachse des Verbindergegenstücks stehenden Steckachse aufweist und abgedichtet entlang der Steckachse in eine Stecköffnung des Verbindergegenstückes einsteckbar ist, sowie mindestens einen Leitungsabgang aufweist, aus Rastmitteln zum Arretieren des Steckerschaftes in seiner eingesteckten Position sowie aus einem gesonderten, die Rastmittel aufweisenden Halteteil, wobei das Halteteil aus einem Halteabschnitt zur Verbindung mit dem Verbindergegenstück sowie aus mindestens zwei die Rastmittel bildenden federelastischen Rastarmen besteht.

Ein ähnlicher Leitungsverbinder ist durch das DE-U-297 21 023 bekannt. Dabei ist das als Rastmittel zwei federnde Rastarme aufweisende Halteteil derart beweglich mit dem Steckerteil verbunden, dass das Einstecken des Steckerschaftes und das Verrasten der Rastmittel unabhängig voneinander durchführbar sind. Dies bedeutet, dass zuerst nur der Steckerschaft eingesteckt wird. Erst danach erfolgt das Verrasten durch eine entsprechende Bewegung des Halteteils, welches dann mit den Rastarmen das Verbindergegenstück rastend umgreift und dadurch das Steckerteil gegen Lösen arretiert.

Aus der DE-A-195 05 574 ist ein weiterer ähnlicher Leitungsverbinder bekannt, bei dem aber in einigen Ausführungen das Steckerteil einstückig mit federnden Haltearmen ausgebildet ist. Auch hier wird das die Aufnahmebohrung aufweisende Gehäuse von den Haltearmen des Steckers rastend umgriffen.

Aus der US-A-5 167 213 ist ein Leitungsverbinder der eingangs genannten Art bekannt, bei dem das Verbindergegenstück jeweils einen Anschlußstutzen aufweist.

Daher verläuft die Längsachse des Verbindergegenstücks koaxial zur Steckachse des Steckers. Die vorhandenen Rastmittel sind in einer Ebene liegend zueinander beabstandet in zur Steckachse des Verbindergegenstücks senkrechten Ebenen angeordnet und vom Halteabschnitt nach innen eingebogen. Das Steckerteil ist daher relativ zu dem Verbindergegenstück nicht kipp- und verdrehsicher fixiert.

Die US-A-4 865 361 beschreibt ebenfalls einen Leitungsverbinder, bei dem in einer Ausführung eine Verrastung mittels Rastelementen erfolgt, die am Halteteil angeordnet sind. Auf diese Halteelemente trifft das Gleiche zu, wie auf die Halteelemente gemäß der US-A-5 167 213, nämlich dass sie in einer Ebene liegend zueinander beabstandet in zur Steckachse des Verbindergegenstücks senkrechten Ebenen vom Halteabschnitt nach innen eingebogen sind. Die Verbindung weist daher auch den gleichen Mangel auf.

Der vorliegenden Erfindung liegt die Aufgabe zu Grunde, einen Leitungsverbinder der gattungsgemäßen Art so zu verbessern, dass mit konstruktiv und herstellungsmäßig einfachen und preisgünstigen Mitteln eine gegen mechanische Beanspruchungen besonders sichere Verbindung zwischen dem Steckerteil und dem Verbindergegenstück erreicht wird.

Erfindungsgemäß wird dies dadurch erreicht, dass der Halteabschnitt zur kipp- und verdrehsicheren Halteverbindung mit dem Verbindergegenstück im Wesentlichen derart ringförmig ausgebildet ist, dass er auf das im Wesentlichen länglich zylindrische Verbindergegenstück entlang dessen Längsachse das Verbindergegenstück im Bereich der Stecköffnung umschließend aufschiebbar ist und eine die Stecköffnung freilassende Durchführöffnung für den Steckerschaft aufweist, wodurch der durch die Durchführöffnung in die Stecköffnung eingreifende Steckerschaft das Halteteil gegen eine Verschiebung entlang der Längsachse des Verbindergegenstücks sichert, und dass die Rastarme derart parallel zueinander beabstandet in zur Längsachse des Verbindergegenstücks senkrechten Ebenen vom Halteabschnitt radial abstehen, dass das Steckerteil zwischen die Rastarme in Steckrichtung einsteckbar und von den Rastarmen in der eingesteckten Position umgriffen und rastend hintergriffen ist, wodurch das Steckerteil relativ zu dem Verbindergegenstück sicher gegen Kippen und gegen ein Verdrehen um seine Steckachse sowie um die Längsachse des Verbindergegenstücks fixiert ist.

Somit kann zunächst das Halteteil über seinen Halteabschnitt mechanisch mit dem Verbindergegenstück verbunden werden. Nach dem anschließenden Einstecken des Steckerschaftes in die Stecköffnung ist über die Rastarme des Halteteils auch das gesamte Steckerteil mechanisch kipp- und verdrehsicher, d.h. in definierter Ausrichtung bezüglich der Steckachse des Steckerschaftes sowie auch bezüglich einer Abgangsachse des - bevorzugt als Rohr- oder Schlauchstutzen mit Dornprofil ausgebildeten - Leitungsabganges, mit dem Verbindergegenstück verbunden. Dabei kann das Halteteil auf einfache und preisgünstige Weise insbesondere als einstückiges Kunststoff-Formteil ausgeführt sein.

Weitere vorteilhafte Ausgestaltungsmerkmale der Erfindung sind in den Unteransprüchen enthalten.

Anhand von in der Zeichnung veranschaulichten, bevorzugten Ausführungsbeispielen soll die Erfindung genauer erläutert werden. Dabei zeigen:
- Fig. 1: eine Perspektivansicht der wesentlichen Bestandteile eines erfindungsgemäßen Leitungsverbinders vor der Verbindung mit einem Verbindergegenstück,
- Fig. 2: eine Perspektivansicht des erfindungsgemäßen Leitungsverbinders in seinem mit dem Verbindergegenstück verbundenen, gesteckten Zustand,
- Fig. 3: einen Querschnitt durch die gesamte Anordnung in der gesteckten Position gemäß Fig. 2,
- Fig. 4: eine vergrößerte Detailansicht in Pfeilrichtung IV gemäß Fig. 3 im Bereich eines der Rastarme des Halteteils,
- Fig. 5: eine Ausführungsvariante des Steckerteils in Perspektivansicht,
- Fig. 6: eine Seitenansicht des Steckerteils in Pfeilrichtung VI nach Fig. 5 und
- Fig. 7: eine Draufsicht in Pfeilrichtung VII gemäß Fig. 6.

In den verschiedenen Figuren der Zeichnung sind gleiche bzw. sich funktionell entsprechende Teile auch durchweg mit den gleichen Bezugszeichen versehen.

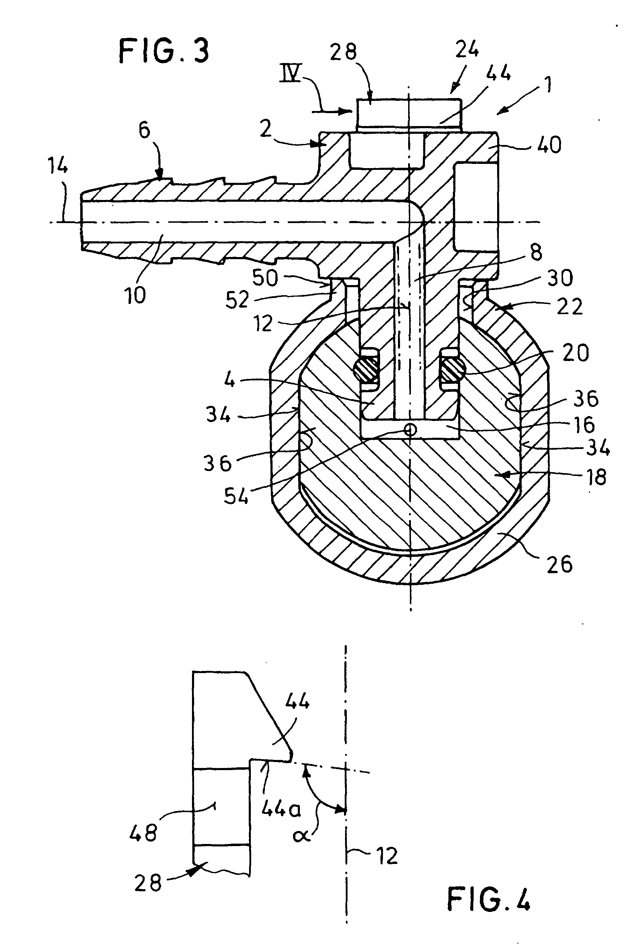

Ein erfindungsgemäßer Leitungsverbinder 1 besteht aus einem Steckerteil 2 mit einem Steckerschaft 4 und mindestens einem Leitungsabgang 6. Der Steckerschaft 4 weist einen inneren Durchgangskanal 8 auf (siehe Fig. 3), der in einen inneren Kanal 10 des Leitungsabganges 6 übergeht. Im dargestellten, bevorzugten Ausführungsbeispiel verlaufen der Steckerschaft 4 bezüglich seiner Steckachse 12 und der Leitungsabgang 6 bezüglich seiner Abgangsachse 14 rechtwinklig zueinander, d.h. die Achsen 12, 14 schließen einen Winkel von 90° ein. Der Leitungsabgang 6 ist bevorzugt als Stutzen mit einem Dornprofil zum Aufstecken einer nicht dargestellten Rohr- oder Schlauchleitung ausgebildet.

Das Steckerteil 2 ist mit dem Steckerschaft 4 in eine Stecköffnung 16 eines Verbindergegenstückes 18 einsteckbar. Zur Abdichtung trägt der Steckerschaft 4 in einer äußeren Ringnut einen Dichtring 20.

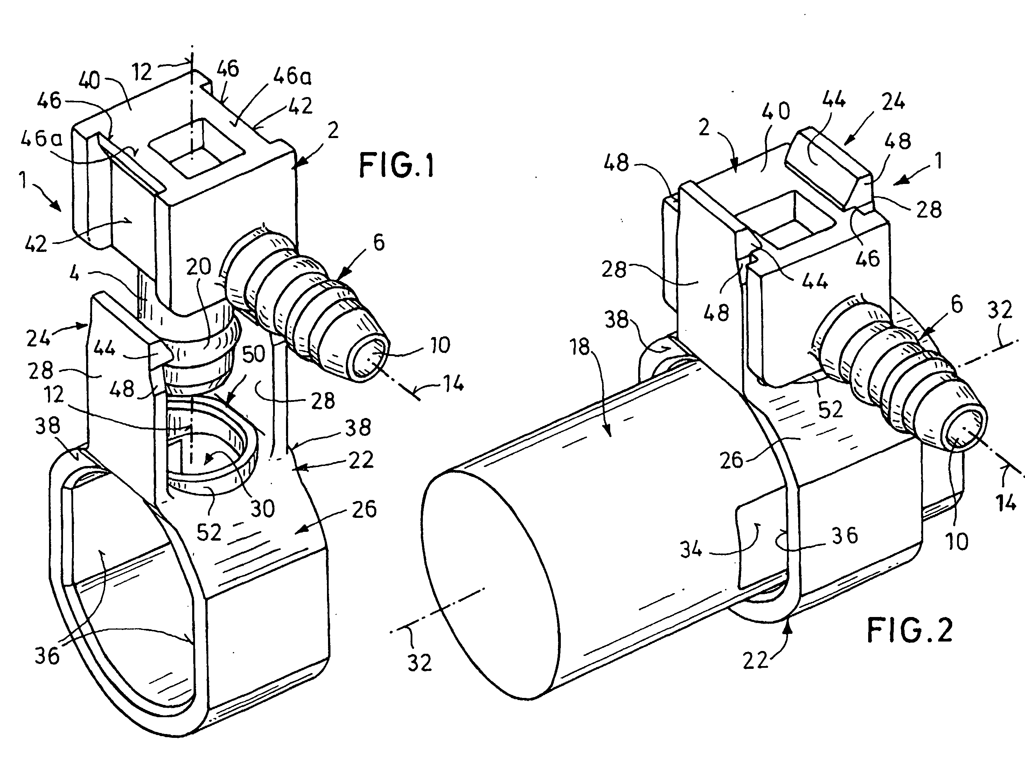

Zum Arretieren des Steckerschaftes 4 in seiner eingesteckten Position (Fig. 2 und 3) ist ein gesondertes Halteteil 22 mit Rastmitteln 24 vorgesehen.

Erfindungsgemäß besteht das Halteteil 22 aus einem Halteabschnitt 26 zur kipp- und verdrehsicheren Halteverbindung mit dem Verbindergegenstück 18 sowie aus mindestens zwei die Rastmittel 24 bildenden, federelastischen Rastarmen 28. Nach dem Verbinden des Halteteils 22 mit dem Verbindergegenstück 18 über den Halteabschnitt 26 ist das Steckerteil 2 derart zwischen die Rastarme 28 einsteckbar, daß die Rastarme 28 das Steckerteil 2 in der eingesteckten Position umgreifen und rastend hintergreifen und dadurch relativ zu dem Verbindergegenstück 18 auch kipp- und verdrehsicher fixieren.

In der bevorzugten Ausgestaltung ist dazu der Halteabschnitt 26 des Halteteils 22 im Wesentlichen ringförmig ausgebildet und dadurch auf das im Wesentlichen länglich zylindrische Verbindergegenstück 18 so axial aufschiebbar, daß in der aufgeschobenen Stellung nach Fig. 2 der ringförmige Halteabschnitt 26 das Verbindergegenstück 18 im Bereich der Stecköffnung 16 (siehe dazu Fig. 3) mit nur geringem, ein Aufschieben ermöglichendem Spiel umschließt. Dabei weist der ringförmige Halteabschnitt 26 eine den Bereich der Stecköffnung 16 freilassende Durchführöffnung 30 für den Steckerschaft 4 auf (vgl. dazu auch Fig. 1).

Der ringförmige Halteabschnitt 26 ist derart ausgebildet, daß er in seiner auf dem Verbindergegenstück 18 sitzenden Position (Fig. 2) gegen Verdrehen um die Längsachse 32 des Verbindergegenstückes 18 sowie auch gegen Verkippen relativ zu der Längsachse 32 gesichert ist. Dies wird einerseits dadurch erreicht, daß der ringförmige Halteabschnitt 26 in Richtung der Längsachse 32 gesehen eine relativ große Breite aufweist. Andererseits weist der ringförmige Halteabschnitt 26 eine von der Kreisform abweichende Innenquerschnittsform auf, und das Verbindergegenstück 18 weist in diesem Bereich eine entsprechend angepaßte Außenquerschnittsform auf. Vorzugsweise - wie dargestellt - weist das weitgehend zylindrische Verbindergegenstück 18 in seinem zur Verbindung mit dem Halteabschnitt 26 vorgesehenen Bereich zwei diametral gegenüberliegende äußere Abflachungen 34, sog. Schlüsselflächen, auf und der Halteabschnitt 26 besitzt zwei entsprechende innere Anlageflächen 36.

Die beiden Rastarme 28 sind jeweils derart streifenförmig ausgebildet, daß sie in zueinander im Wesentlichen parallelen und zur Längsachse 32 senkrechten Ebenen liegen. Dabei sind die beiden Rastarme 28 derart radial von den beiden Stirnkanten 38 des ringförmigen Halteabschnittes 26 ausgehend angeordnet, daß sie in Richtung der Längsachse 32 des Verbindergegenstückes 18 gesehen beidseitig neben der Stecköffnung 16 bzw. der Durchführöffnung 30 des Halteabschnittes 26 zueinander etwa parallel beabstandet angeordnet sind. Dadurch begrenzen die beiden Rastarme 28 zwischen sich einen Aufnahmeraum für das Steckerteil 2 bzw. für einen zwischen dem Steckerschaft 4 und dem Leitungsabgang 6 angeordneten, vorzugsweise etwa quaderförmigen Abschnitt 40. Hierbei wirken vorteilhafterweise die beiden Rastarme 28 mit Führungsvertiefungen 42 des Steckerteils 2 bzw. seines Abschnittes 40 zu dessen kippfreier Führung zusammen. Hierdurch wird bereits während des Einsteckens eine kippsichere Führung des Steckerteils 2 gewährleistet.

An ihren freien Enden weisen die Rastarme 28 einander zugekehrte Rastnasen 44 zum insbesondere formschlüssigen Hintergreifen von Rastkanten 46 des Steckerteils 2 auf. Zudem sind an den freien Enden der Rastarme 28 seitliche Führungsschrägen 48 gebildet, die das Einführen des Steckerteils 2 erleichtern.

Wie sich weiterhin noch aus Fig. 1 und 3 ergibt, weist das Halteteil 22 vorzugsweise im zwischen den Rastarmen 28 liegenden Bereich des Halteabschnittes 26 Anlagemittel 50 zur einsteckbegrenzenden Anlage des Steckerteils 2 auf. Vorzugsweise sind die Anlagemittel 50 von einem die Durchführöffnung 30 umschließenden Ringsteg 52 gebildet.

Durch die beschriebene, besondere Anordnung der Rastarme 28 ist es vorteilhafterweise möglich, den Leitungsabgang 6 bezüglich seiner Abgangsachse 14 jeweils etwa senkrecht zu der Steckachse 12 des Steckerschachtes 4 sowie zu der Längsachse 32 des Verbindergegenstückes 18 auszurichten.

Das Halteteil 22 mit seinem Halteabschnitt 26 und den Rastarmen 28 kann bevorzugt als einstückiges Formteil aus Kunststoff ausgebildet sein. Vor allem wegen seiner guten Temperaturfestigkeit, insbesondere bei höheren, z. B. im Kfz-Motorbereich herrschenden Temperaturen, ist PEI (Polyetherimid, z. B. erhältlich unter dem Handelsnamen "Ultem") besonders geeignet, und zwar zur Gewährleistung einer guten Elastizität der Rastarme bevorzugt ohne Faserverstärkungsanteil. Alternativ ist aber auch eine Ausführung des Halteteils aus Metall, beispielsweise Messing möglich. Das Steckerteil 2 kann ebenfalls aus Kunststoff oder Metall bestehen, wobei als Kunststoff bevorzugt PEI mit (Glas-) Faserverstärung, z. B. PEI GF 20, eingesetzt wird, um eine gute Stabilität zu erreichen. Die Bestandteile (insbesondere Stecker- und Halteteile) können aus jeweils dem gleichen Material, insbesondere aber aus unterschiedlichen Materialien bestehen.

Bei dem Verbindergegenstück 18 handelt es sich beispielsweise um einen sog. Rail-Injektor mit Lecköl-Rückführung für Kraftstoff-Einspritzanlagen, insbesondere für Diesel-Kraftstoff nach DIN EN 590. Dabei mündet ein Kanal 54 in die Stecköffnung 16 (siehe Fig. 3), so dass dieser Kanal 54 mit dem Durchgangskanal 8 des eingesteckten Steckerschaftes 4 in Verbindung steht.

Der erfindungsgemäße Leitungsverbinder 1 gewährleistet eine mechanisch sehr sichere Verbindung zum Verbindergegenstück 18. So sitzt das Halteteil 22 zwar mit dem ringförmigen Halteabschnitt 26 in Richtung der Längsachse 32 verschiebbar auf dem Verbindergegenstück 18, jedoch gegen Verdrehen und Verkippen gesichert. Nach dem Einstecken des Steckerteils 2 wird das Halteteil 22 auch gegen axiales Verschieben fixiert, indem ja der Steckerschaft 4 durch die Durchführöffnung 30 hindurch in die Stecköffnung 16 eingreift.

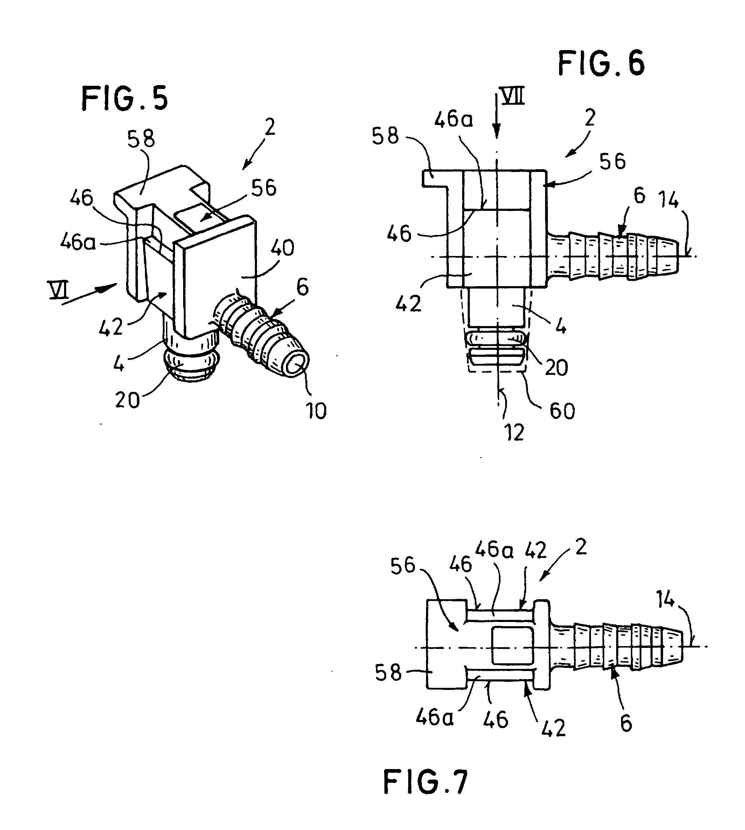

Wie sich noch aus Fig. 4 in Verbindung mit Fig. 1 und auch mit Fig. 5 bis 7 ergibt, weisen die Rastnasen 44 und die Rastkanten 46 im Bereich ihrer zusammenwirkenden Flächen 44a, 46a einen Wirkflächenwinkel α ≥ 90° auf, wodurch ein reiner Formschluß im Bereich der Rastmittel 24 erreicht wird. Gemäß Fig. 4 ist der Wirkflächenwinkel α vorzugsweise zur Bildung eines Hinterschnittes > 90°. Hierdurch werden sehr hohe Haltekräfte (Abzugskräfte) erreicht. Dabei ist es auch möglich, nur die Rastnase 44 mit einem Hinterschneidungswinkel > 90° entsprechend Fig. 4 auszuführen, im Bereich der Rastkanten 46 aber einen Winkel von 90° zu wählen. Auch dadurch können hohe Abzugskräfte erreicht werden, weil es zunächst durch ein Kipp-bzw. Biegemoment ausgehend von einer Linienanlage zu einem flächigen Anschmiegen der Fläche 44a an die Gegenfläche 46a kommt. Dies ist auch im Hinblick auf eventuelle Herstellungstoleranzen von Vorteil, um jedenfalls eine rein formschlüssige Rastverbindung zu gewährleisten.

Bei der in den Fig. 5 bis 7 dargestellten Ausführungsvariante weist das Steckerteil 2 auf seiner dem Steckerschaft 4 in Richtung der Steckachse 12 gesehen gegenüberliegenden Seite einen die Rastkanten 46 überragenden Betätigungsabschnitt 56 auf. Durch diesen Betätigungsabschnitt 56 wird vorteilhafterweise vermieden, dass die Bedienungsperson beim Stecken mit dem Finger oder Daumen die Rastarme 28 des Halteteils 22 berühren kann, wodurch eventuell durch Spreizen der Rastarme 28 die Arretierung nicht wunschgemäß erfolgen könnte. Durch den Betätigungsabschnitt 56 kann der Finger oder Daumen jedoch vorteilhafterweise nicht mehr in den Bereich zwischen den Rastarmen 28 gelangen. Weiterhin ist es für ein Lösen bzw. Herausziehen des Steckerteils 2 vorteilhaft, wenn das Steckerteil 2 bzw. der Betätigungsabschnitt 56 einen Greifansatz 58 aufweist. Im dargestellten Ausführungsbeispiel ist dieser Greifansatz 58 derart stegförmig ausgebildet, dass er senkrecht zur Steckachse 12 vorspringend sich insbesondere in eine dem Leitungsabgang 6 entgegengesetzte Richtung erstreckt. Dadurch kann der Greifansatz 58 gut mit dem Finger untergriffen und damit das Steckerteil 2 abgezogen werden.

Wie sich noch aus Fig. 6 ergibt, kann zum Zwecke des Transports und/oder der Aufbewahrung des Steckerteils 2 in einem nicht gesteckten, vom Verbindergegenstück und von dem Halteteil unabhängigen Zustand eine nur strichpunktiert angedeutete Schutzkappe 60 vorgesehen sein, die insbesondere kraft- und/oder formschlüssig auf den Steckerschaft 4 aufsetzbar ist. Hierdurch kann ein Schutz gegen mechanische Beanspruchung und Verschmutzung erreicht werden.

Weiterhin ist bei der Ausführung nach Fig. 5 bis 7 vorgesehen, dass im Bereich der Führungsvertiefungen 42 Schrägflächen derart gebildet sind, dass beim Einstecken des Steckerteils 2 zwischen die Rastarme 28 letztere über die Schrägflächen gespreizt werden, bis sie die Rastkanten 46 umgreifen. Eine der Schrägflächen im Bereich der Führungsvertiefung 42 ist am besten in der Perspektivansicht gemäß Fig. 5 zu erkennen.

## Patentansprüche

1. Rastbarer Leitungsverbinder (1) zum Anschluß mindestens einer Druck- und/oder Strömungsmittel-Leitung, insbesondere Kraftstoff-Leitung, an ein Verbindergegenstück (18), bestehend aus einem Steckerteil (2), das einen Steckerschaft (4), der eine senkrecht zu einer Längsachse (32) des Verbindergegenstücks (18) auszurichtende Steckachse (12) aufweist und abgedichtet entlang der Steckachse (12) in eine Stecköffnung (16) des Verbindergegenstückes (18) einsteckbar ist, sowie mindestens einen Leitungsabgang (6) aufweist, aus Rastmitteln (24) zum Arretieren des Steckerschaftes (4) in seiner eingesteckten Position sowie aus einem gesonderten, die Rastmittel (24) aufweisenden Halteteil (22), wobei das Halteteil (22) aus einem Halteabschnitt (26) zur Verbindung mit dem Verbindergegenstuck (18) sowie aus mindestens zwei die Rastmittel (24) bildenden federelastischen Rastarmen (28) besteht, **dadurch gekennzeichnet, dass** der Halteabschnitt (26) zur kipp- und verdrehsicheren Halteverbindung mit dem Verbindergegenstück (18) im Wesentlichen derart ringförmig ausgebildet ist, dass er auf das im Wesentlichen länglich zylindrische Verbindergegenstück (18) entlang dessen Längsachse (32) das Verbindergegenstück (18) im Bereich der Stecköffnung (16) umschließend aufschiebbar ist und eine die Stecköffnung (16) freilassende Durchführöffnung (30) für den Steckerschaft (4) aufweist, wodurch im montierten Zustand der durch die Durchführöffnung (30) in die Stecköffnung (16) eingreifende Steckerschaft (4) das Halteteil (22) gegen eine Verschiebung entlang der Längsachse (32) des Verbindergegenstücks (18) sichert, und dass die Rastarme (28) derart parallel zueinander beabstandet in zur Längsachse (32) des Verbindergegenstücks (18) senkrechten Ebenen vom Halteabschnitt (26) radial abstehen, dass das Steckerteil (2) zwischen die Rastarme (28) in Steckrichtung (12) einsteckbar und von den Rastarmen (28) in der eingesteckten Position umgriffen und rastend hintergriffen ist, wodurch im montierten Zustand das Steckerteil (2) relativ zu dem Verbindergegenstück (18) sicher gegen Kippen und gegen ein Verdrehen um seine Steckachse (12) sowie um die Längsachse (32) des Verbindergegenstücks (18) fixiert ist.

2. Leitungsverbinder nach Anspruch 1,
**dadurch gekennzeichnet, dass** das Halteteil (22) mit dem Halteabschnitt (26) und den Rastarmen (28) als einstückiges Formteil aus Kunststoff, insbesondere aus PEI, ausgebildet ist.

3. Leitungsverbinder nach Anspruch 1,
**dadurch gekennzeichnet, dass** das Halteteil (22) aus Metall, beispielsweise aus Messing, besteht.

4. Leitungsverbinder nach einem der Ansprüche 1 bis 3,
**dadurch gekennzeichnet, dass** der ringförmige Halteabschnitt (26) eine von der Kreisform abweichende Innenquerschnittsform und das Verbindergegenstück (18) eine entsprechend angepaßte Außenquerschnittsform aufweisen.

5. Leitungsverbinder nach Anspruch 4,
**dadurch gekennzeichnet, dass** der Halteabschnitt (26) zwei diametral gegenüberliegende innere Anlageflächen (36) und das Verbindergegenstück (18) zwei entsprechende diametral gegenüberliegende äußere Abflachungen (34) aufweisen.

6. Leitungsverbinder nach einem der Ansprüche 1 bis 5,
**dadurch gekennzeichnet, dass** die zwei Rastarme (28) von den beiden Stirnkanten (38) des ringförmigen Halteabschnittes (26) ausgehend in Richtung dessen Längsachse gesehen beidseitig neben der Durchführöffnung (30) des Halteabschnittes (26) angeordnet sind.

7. Leitungsverbinder nach einem der Ansprüche 1 bis 6,
**dadurch gekennzeichnet, dass** die beiden Rastarme (28) mit Führungsvertiefungen (42) des Steckerteils (2) zu dessen kippfreier Führung zusammenwirken.

8. Leitungsverbinder nach einem der Ansprüche 1 bis 7,
**dadurch gekennzeichnet, dass** die Rastarme (28) endseitig einander gegenüberliegende Rastnasen (44) zum insbesondere formschlüssigen Hintergreifen von Rastkanten (46) des Steckerteils (2) aufweisen.

9. Leistungsverbinder nach Anspruch 8,
**dadurch gekennzeichnet, dass** die Rastnasen (44) und die Rastkanten (46) im Bereich ihrer zusammenwirkenden Flächen (44a, 46a) einen Wirkflächenwinkel (α) größer/gleich 90° derart aufweisen, dass ein reiner Formschluß erreicht wird, wobei vorzugsweise der Wirkflächenwinkel (α) zur Bildung eines Hinterschnittes größer 90° ist

10. Leitungsverbinder nach einem der Ansprüche 1 bis 9,
**dadurch gekennzeichnet, dass** das Halteteil (22) im zwischen den Rastarmen (28) liegenden Bereich des Halteabschnittes (26) Anlagemittel (50) zur einsteckbegrenzenden Anlage des Steckerteils (2) aufweist, wobei die Anlagemittel (50) vorzugsweise von einem die Durchführöffnung (30) einschließenden Ringsteg (52) gebildet sind.

11. Leitungsverbinder nach einem der Ansprüche 1 bis 10,
**dadurch gekennzeichnet, dass** der - vorzugsweise als Dornprofil-Stutzen ausgebildete - Leitungsabgang (6) des Steckerteils (2) sich in Richtung einer zur Längsachse des ringförmigen Halteabschnittes (26) und zur Steckachse (12) des Steckerschaftes (4) etwa senkrechten Abgangsachse (14) erstreckt.

12. Leitungsverbinder nach einem der Ansprüche 8 bis 11,
**dadurch gekennzeichnet, dass** das Steckerteil (2) auf seiner dem Steckerschaft (4) gegenüberliegenden Seite einen die Rastkanten (46) überragenden Betätigungsabschnitt (56) aufweist.

13. Leitungsverbinder nach einem der Ansprüche 1 bis 12,
**dadurch gekennzeichnet, dass** das Steckerteil (2)-insbesondere im Bereich des Betätigungsabschnittes (56) - einen vorzugsweise etwa senkrecht zur Steckachse (12) vorspringenden und sich insbesondere in eine dem Leitungsabgang (6) entgegengesetze Richtung erstreckenden Greifansatz (58) aufweist.

14. Leitungsverbinder nach einem der Ansprüche 1 bis 13,
**dadurch gekennzeichnet, dass** das Steckerteil (2) aus Kunststoff, insbesondere PEI mit Faseranteil, oder aus Metall besteht.

## Claims

1. Latchable line connector (1) for the connection of at least one pressure-medium and/or flow-medium line, in particular fuel line, onto a connector counterpart (18), comprising a plug-in part (2) having a plug-in stem (4) which has a plug-in axis (12) to be aligned perpendicular to a longitudinal axis (32) of the connector counterpart (18) and which can be plugged in a sealed manner along the plug-in axis (12) into a plug-in opening (16) of the connector counterpart (18), and has at least one line outlet (6), and also comprising latching means (24) for locking the plug-in stem (4) in its plugged-in position, and comprising a separate retaining part (22) having the latching means (24), the retaining part (22) comprising a retaining section (26) for the connection to the connector counterpart (18), and comprising at least two resilient latching arms (28) which form the latching means (24), **characterized in that** the retaining section (26) for the retaining connection to the connector counterpart (18) in a manner secure against tilting and twisting is of essentially annular design such that it can be pushed onto the essentially elongated cylindrical connector counterpart (18) along its longitudinal axis (32) so that it surrounds the connector counterpart (18) in the region of the plug-in opening (16) and has a passage opening (30) for the plug-in stem (4), which opening leaves the plug-in opening (16) free, as a result of which, in the mounted state, the plug-in stem (4), which engages in the plug-in opening (16) through the passage opening (30), secures the retaining part (22) against displacement along the longitudinal axis (32) of the connector counterpart (18), and **in that** the latching arms (28) protrude radially from the retaining section (26) such that they are spaced apart parallel to each other in planes perpendicular to the longitudinal axis (32) of the connector counterpart (18), **in that** the plug-in part (2) can be plugged in between the latching arms (28) in the plug-in direction (12), the latching arms (28) grip around the plug-in part (2) in the plugged-in position and grip behind it in a latching manner and thereby in the mounted state the plug-in part (2) is fixed relative to the connector counterpart (18) in a manner secure against tilting and twisting about its plug-in axis (12) and about the longitudinal axis (32) of the connector counterpart (18).

2. Line connector according to Claim 1, **characterized in that** the retaining part (22) together with the retaining section (26) and the latching arms (28) is designed as an integral shaped part made of plastic, in particular of PEI.

3. Line connector according to Claim 1, **characterized in that** the retaining part (22) consists of metal, for example of brass.

4. Line connector according to one of Claims 1 to 3, **characterized in that** the annular retaining section (26) has an internal cross-sectional shape deviating from the circular shape and the connector counterpart (18) has a correspondingly matched external cross-sectional shape.

5. Line connector according to Claim 4, **characterized in that** the retaining section (26) has two diametrically opposite, inner bearing surfaces (36) and the connector counterpart (18) has two corresponding diametrically opposite, outer flattened portions (34).

6. Line connector according to one of Claims 1 to 5, **characterized in that** the two latching arms (28) are arranged such that they emanate from the two end edges (38) of the annular retaining section (26) as seen in the direction of its longitudinal axis on both sides next to the passage opening (30) of the retaining section (26).

7. Line connector according to one of Claims 1 to 6, **characterized in that** the two latching arms (28) interact with guide depressions (42) of the plug-in part (2) in order to guide the latter in a tilt-free manner.

8. Line connector according to one of Claims 1 to 7, **characterized in that** the latching arms (28) have, on the end side, mutually opposite latching lugs (44) for latching edges (46) of the plug-in part (2) to grip behind, in particular in a form-fitting manner.

9. Line connector according to Claim 8, **characterized in that** the latching lugs (44) and the latching edges (46) have, in the region of their interacting surfaces (44a, 46a), an effective surface angle (α) of greater than/equal to 90° in such a manner that a pure form-fitting engagement is achieved, with the effective surface angle (α) preferably being greater than 90° in order to form an undercut.

10. Line connector according to one of Claims 1 to 9, **characterized in that** the retaining part (22) has bearing means (50) **in that** region of the retaining section (26) which lies between the latching arms (28) for placing the plug-in part (2) against in a manner restricting its plugging in, the bearing means (50) preferably being formed by an annular web (52) which encloses the passage opening (30).

11. Line connector according to one of Claims 1 to 10, **characterized in that** the line outlet (6) of the plug-in part (2), which outlet is preferably designed as a connecting branch with a pointed profile, extends in the direction of an outlet axis (14) which is approximately perpendicular with respect to the longitudinal axis of the annular retaining section (26) and with respect to the plug-in axis (12) of the plug-in stem (4).

12. Line connector according to one of Claims 8 to 11, **characterized in that** the plug-in part (2) has, on its side opposite the plug-in stem (4), an actuating section (56) which projects over the latching edges (46).

13. Line connector according to one of Claims 1 to 12, **characterized in that** the plug-in part (2), in particular in the region of the actuating section (56), has a gripping projection (58) which preferably protrudes approximately perpendicularly with respect to the plug-in axis (12) and in particular extends in a direction opposed to the line outlet (6).

14. Line connector according to one of Claims 1 to 13, **characterized in that** the plug-in part (2) consists of plastic, in particular PEI with a fibre component, or of metal.

## Revendications

1. Raccord de conduite encliquetable (1) destiné au branchement d'au moins une conduite sous pression et/ou conduite de fluide, en particulier conduite de carburant, à un raccord complémentaire (18), formé par un élément mâle (2), qui comporte une tige de fixation (4), comportant un axe de fixation (12), à orienter perpendiculairement à un axe longitudinal (32) du raccord complémentaire (18), et pouvant être enfiché de manière étanche le long de l'axe de fixation (12) dans un orifice d'introduction (16) du raccord complémentaire (18), et au moins un embout de raccordement (6), par des moyens d'arrêt (24), destinés à bloquer la tige de fixation (4) dans sa position enfichée, ainsi que par un élément de retenue (22) séparé, muni des moyens d'arrêt (24), l'élément de retenue (22) étant formé par un tronçon de retenue (26) destiné à être assemblé au raccord complémentaire (18), ainsi que par au moins deux bras d'arrêt (28) élastiquement flexibles formant les moyens d'arrêt (24), **caractérisé en ce que** le tronçon de retenue (26) est conçu avec une forme sensiblement annulaire pour un assemblage de retenue immobile en basculement et en rotation avec le raccord complémentaire (18), de telle sorte qu'il peut être emmanché sur le raccord complémentaire (18) sensiblement cylindrique longitudinalement, le long de l'axe longitudinal (32) de celui-ci en enserrant le raccord complémentaire (18) dans la zone de l'orifice d'introduction (16), et comporte un orifice de passage (30) pour la tige de fixation (4), libérant l'orifice d'introduction (16), moyennant quoi la tige de fixation (4) qui, en position montée, s'engage à travers l'orifice de passage (30) dans l'orifice d'introduction (16), bloque l'élément de retenue (22) empêchant un déplacement le long de l'axe longitudinal (32) du raccord complémentaire (18), et **en ce que** les bras d'arrêt (28) sont écartés parallèlement l'un de l'autre en saillie radiale dans des plans du tronçon de retenue (26) perpendiculaires à l'axe longitudinal (32) du raccord complémentaire (18), de telle sorte que l'élément mâle (2) peut être enfiché entre les bras d'arrêt (28) dans la direction d'introduction (12) et, dans la position enfichée, est enserré et reçu par encliquetage dans les bras d'arrêt (28), moyennant quoi l'élément mâle (2), en position montée, est bloqué par rapport au raccord complémentaire (18) de manière à ne pouvoir ni basculer ni tourner autour de son axe de fixation (12), ainsi qu'autour de l'axe longitudinal (32) du raccord complémentaire (18).

2. Raccord de conduite selon la revendication 1, **caractérisé en ce que** l'élément de retenue (22) avec le tronçon de retenue (26) et les bras d'arrêt (28) est réalisé en un seul tenant sous forme de pièce moulée en matière plastique, en particulier en PEI.

3. Raccord de conduite selon la revendication 1, **caractérisé en ce que** l'élément de retenue (22) est réalisé en métal, par exemple en laiton.

4. Raccord de conduite selon l'une quelconque des revendications 1 à 3, **caractérisé en ce que** le tronçon de retenue (26) annulaire comporte une section avec une forme intérieure s'écartant de la forme circulaire et le raccord complémentaire (18) comporte une section avec une forme extérieure adaptée à celle-ci.

5. Raccord de conduite selon la revendication 4, **caractérisé en ce que** le tronçon de retenue (26) comporte deux surfaces d'appui (36) intérieures diamétralement opposées et le raccord complémentaire (18) comporte deux aplatissements (34) extérieurs correspondants diamétralement opposés.

6. Raccord de conduite selon l'une quelconque des revendications 1 à 5, **caractérisé en ce que** les deux bras d'arrêt (28) sont disposés en partant des deux bords frontaux (38) du tronçon de retenue (26) annulaire, par référence à la direction de l'axe longitudinal de celui-ci, de part et d'autre de l'orifice de passage (30) du tronçon de retenue (26).

7. Raccord de conduite selon l'une quelconque des revendications 1 à 6, **caractérisé en ce que** les deux bras d'arrêt (28) coopèrent avec des creux de guidage (42) de l'élément mâle (2) en vue d'un guidage sans basculement de celui-ci.

8. Raccord de conduite selon l'une quelconque des revendications 1 à 7, **caractérisé en ce que** les bras d'arrêt (28), du côté de l'extrémité, comportent des talons d'arrêt (44) face à face, destinés à s'engager par emboîtement derrière des bords d'arrêt (46) de l'élément mâle (2).

9. Raccord de conduite selon la revendication 8, **caractérisé en ce que** les talons d'arrêt (46), dans la zone de leurs surfaces (44a, 46a) coopérantes, forment un angle actif (α) supérieur ou égal à 90°, de manière à obtenir un emboîtement direct, l'angle actif (α) étant de préférence supérieur à 90° pour former une contre-dépouille.

10. Raccord de conduite selon l'une quelconque des revendications 1 à 9, **caractérisé en ce que** l'élément de retenue (22), dans la zone du tronçon de retenue (26) située entre les bras d'arrêt (28), comporte des moyens d'appui (50) formant un appui limitant l'introduction de l'élément mâle (2), les moyens d'appui (50) étant formés de préférence par une nervure annulaire (52) entourant l'orifice de passage (30).

11. Raccord de conduite selon l'une quelconque des revendications 1 à 10, **caractérisé en ce que** l'embout de raccordement (6) - conçu de préférence sous forme d'ajutage à profil de goujon - de l'élément mâle (2) s'étend dans la direction d'un axe de raccordement (14) sensiblement perpendiculaire à l'axe longitudinal du tronçon de retenue (26) annulaire et à l'axe de fixation (12) de la tige de fixation (4).

12. Raccord de conduite selon l'une quelconque des revendications 8 à 11, **caractérisé en ce que** l'élément mâle (2) sur son côté opposé à la tige de fixation (4) comporte un tronçon de manoeuvre (56) s'engageant au-delà des bords d'arrêt (46).

13. Raccord de conduite selon l'une quelconque des revendications 1 à 12, **caractérisé en ce que** l'élément mâle (2) - en particulier dans la zone du tronçon de manoeuvre (56) - comporte une saillie de manoeuvre (58), qui forme une saillie de préférence sensiblement perpendiculaire à l'axe de fixation (12) et s'étend en particulier dans une direction opposée à l'embout de raccordement (6).

14. Raccord de conduite selon l'une quelconque des revendications 1 à 13, **caractérisé en ce que** l'élément mâle (2) est réalisé en matière plastique, de préférence en PEI contenant des fibres, ou en métal.
